# EUROPÄISCHE PATENTSCHRIFT

(11) **EP 0 641 062 B1**
(45) Veröffentlichungstag und Bekanntmachung des Hinweises auf die Patenterteilung: **07.05.1997**
(21) Anmeldenummer: 94202407.6
(22) Anmeldetag: 23.08.1994
(51) Int. Cl.: H02K 29/00, H02K 21/18, H02K 3/18

(54) **Kleinmotor mit einem permanentmagnetischen Rotor**
Small motor with a permanent-magnet rotor
Petit moteur avec un rotor à aimant permanent

(30) Priorität: 28.08.1993 DE 4329046
(43) Veröffentlichungstag der Anmeldung: 01.03.1995
(73) Patentinhaber: Philips Patentverwaltung GmbH, 22335 Hamburg (DE); PHILIPS ELECTRONICS N.V., 5621 BA Eindhoven (NL)
(72) Erfinder: Schemmann, Hugo, Dr., c/o Philips Patentverwaltung, D-20097 Hamburg (DE); Hüsgen, Theo, c/o Philips Patentverwaltung GmbH, D-20097 Hamburg (DE)
(74) Vertreter: von Laue, Hanns-Ulrich, Dipl.-Ing.

(56) Entgegenhaltungen:
- CH-A- 621 442
- FR-A- 913 228
- US-A- 3 333 172
- US-A- 4 500 824

## Beschreibung

Die Erfindung bezieht sich auf einen Kleinmotor mit einem zweipoligen permanent-magnetischen Rotor und einem Stator mit U-förmigem Blechpaket, dessen Schenkel im Endbereich für den Rotor magnetische Pole bilden, wobei die Schenkel mit zwei abwechselnd leitenden Erregerspulen bewickelt sind.

Kleinmotoren mit permanent-magnetischen Rotoren zeichnen sich durch eine einfache Bauweise und damit geringen Herstellungskosten aus. Als Synchronmotoren finden sie Anwendung vor allem im Bereich kleiner Haushaltsgeräte. Ein derartiger, als Synchronmotor zu betreibender Kleinmotor ist in der Zeitschrift "Feinwerktechnik und Meßtechnik" 87 (1979) 4, Seiten 163 bis 169, beschrieben.

Werden diese Motoren elektronisch positionsabhängig angesteuert, dann verhalten sie sich ähnlich wie kollektorgesteuerte Gleichstrommotoren. Das maximale Drehmoment dieser Motoren wird begrenzt durch ihre Baugröße. Sowohl das maximal zu erzeugende Feld als auch die Spulenverluste lassen bei gegebenen Abmessungen eine Erhöhung des Motormomentes nicht zu. Zur Erhöhung der abgegebenen Leistung muß folglich die Drehzahl des Motors erhöht werden.

Zur elektronischen Ansteuerung dieser Motoren wird die Wicklung in zwei jeweils auf Eisenschenkel aufgeschobene Hälften aufgeteilt, die durch Schalttransistoren abwechselnd so angesteuert werden, daß sich die Feldrichtung im Luftspalt umkehren kann (US-PS 33 33 172). Beim Umschalten von einer zur anderen Wicklung entstehen, bedingt durch die Streuinduktivität, Schaltspannungen. Die Spannungsspitzen dieser Schaltspannungen können durch eine spezielle Beschaltung auf ein für die Schalttransistoren ungefährliches Maß begrenzt werden. Neben dem Schaltungsaufwand und damit verbundenen Kosten ist diese Methode aber auch verlustbehaftet.

Die Streuinduktivität kann durch Verwendung von bifilaren Wicklungen so weit verringert werden, daß eine Beschaltung entfallen kann. In der US-PS 45 00 824 ist eine derartige bifilare Wicklung beschrieben.

Bei dem Anwendungsfall des positionsgesteuerten permanent-magnetischen Motors führt aber der bifilare Wicklungsaufbau zu Wicklungskapazitäten, die sich durch die erforderliche Beschaltung noch hochtransformieren. Die Wicklung kommt in diesem Fall bei höheren Drehzahlen in den Bereich der Resonanzfrequenz. Dies führt zu einer Resonanzüberhöhung des Wicklungswiderstandes und letztlich zu einer Reduzierung des Drehmomentes. Durch diese Erscheinung verringert sich das Drehmoment des Motors mit steigender Drehzahl.

Es ist Aufgabe der Erfindung, bei einem Kleinmotor der eingangs erwähnten Art einen Wicklungsaufbau mit kleiner Streuinduktivität zu schaffen, mit dem die Resonanzfrequenz weit außerhalb des Arbeitsbereiches geschoben wird.

Die gestellte Aufgabe ist erfindungsgemäß dadurch gelöst, daß als Erregerspulen auf beiden Schenkeln in zwei Wicklungsgruppen jeweils drei übereinander geschachtelte Wicklungslagen aufgebracht sind, wobei erstens die ganz außen gelegene und zweitens die ganz innen gelegene Wicklungslage des ersten bzw. zweiten Schenkels und drittens die mittlere Wicklungslage des zweiten bzw. ersten Schenkels miteinander in Reihe geschaltet sind.

Bei einem derartigen Wicklungsaufbau ist die Wicklungskapazität gegenüber dem bifilaren Wicklungsaufbau erheblich reduziert. Die Resonanzfrequenz ist in einen Arbeitsbereich weit außerhalb des Arbeitsbereiches des Motors verschoben. Die Streuinduktivität bleibt so gering, daß keine Schaltspitzenbegrenzung erforderlich ist.

Auf diese Weise wird die maximal abzugebende Leistung des permanent-magnetischen Motors wesentlich erhöht. Die Vorteile der streuarmen Wicklung bleiben erhalten.

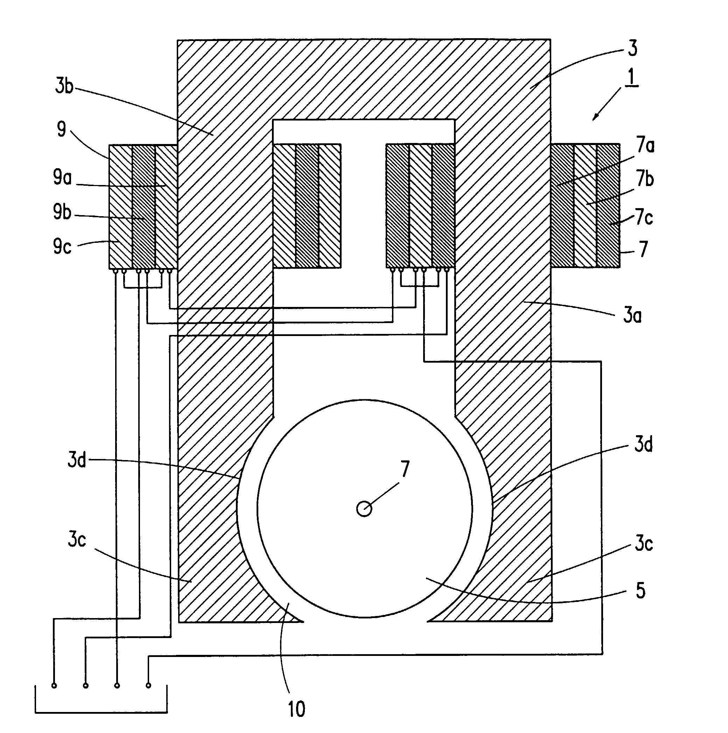

Die Erfindung wird anhand der Zeichnung näher erläutert.

Ein permanent-magnetisch erregter Kleinmotor 1 hat ein U-förmiges Statorblechpaket 3 mit Schenkeln 3a und 3b. Im Bereich 3c der Schenkelenden sind die Schenkel 3a und 3b als magnetische Pole 3d ausgebildet, in denen ein permanent-magnetischer Rotor 5 um eine Achse 7 drehbar ist, wobei zwischen den magnetischen Polen 3d und dem Rotor 5 ein Luftspalt 10 gebildet ist. Dieser permanent-magnetische Rotor ist zweipolig magnetisiert.

Auf die Schenkel 3a und 3b sind Wicklungsgruppen 7 und 9 aufgeschoben. Jede der beiden Wicklungen 7 und 9 bestehen aus drei übereinander geschachtelten Wicklungslagen 7a, 7b, 7c bzw. 9a, 9b, 9c, wobei die mittleren Lagen doppelt soviel Windungen enthalten wie die inneren und äußeren.

Die Anschaltung der Wicklungslagen erfolgt in der Weise, daß diese nach einem bestimmten Prinzip in Reihe geschaltet sind. So sind die äußere Wicklungslage 9c, die innere Wicklungslage 9a der ersten Wicklungsgruppe 9 und die mittlere Wicklungslage 7b der zweiten Wicklungsgruppe 7 miteinander in Reihe geschaltet. Ebenso sind die mittlere Lage 9b der ersten Wicklungsgruppe 9, die äußere Lage 7c der zweiten Wicklung 7 sowie die innere Wicklungslage 7a der zweiten Wicklungsgruppe 7 in Reihe geschaltet.

Die Anschaltung der Wicklungslagen ist derart vorgenommen, daß Spulen 9a, 7b, 9c sich verstärkende Felder durch die Schenkel 3 erzeugen und die Spulen 7a, 9b, 7c sich ebenfalls verstärkende Felder durch die Schenkel 3 entgegengesetzter Richtung erzeugen. Durch abwechselndes Anschalten der Spulengruppen 9a, 7b, 9c und 7a, 9b 7c entsteht somit im Luftspalt 10 ein Wechselfeld, wie es für die Drehbewegung des Rotors 5 erforderlich ist.

Durch die Verschachtelung der aktiven Spulengruppen 9a, 7b, 9c und 7a, 9b, 7c jeweils auf beiden Schenkeln 3a und 3b ist die Kopplung beider Spulengruppen gut, wogegen die Wicklungskapazität gegenüber der bifilaren Wicklung, bei der beide Spulen Draht für Draht aneinanderliegen, reduziert ist.

Der nachteilige Einfluß der Wicklungskapazität auf das Drehmoment und die Verluste, vor allem bei hohen Drehzahlen, wird somit vermieden.

## Patentansprüche

1. Kleinmotor mit einem zweipoligen permanent-magnetischen Rotor (5) und einem Stator (3) mit U-förmigem Blechpaket, dessen Schenkel (3a,3b) im Endbereich (3c) für den Rotor (5) magnetische Pole (3d) bilden, wobei die Schenkel (3a, 3b) mit zwei abwechselnd leitenden Erregerspulen bewickelt sind, dadurch gekennzeichnet, daß als Erregerspulen auf beiden Schenkeln (3a, 3b) in zwei Wicklungsgruppen (7, 9) drei übereinander geschachtelte Wicklungslagen (7a, 7b, 7c; 9a, 9b, 9c) aufgebracht sind, wobei erstens die ganz außen gelegene (7c bzw. 9c) und zweitens die ganz innen gelegene (7a bzw. 9a) Wicklungslage des ersten bzw. zweiten Schenkels (3a, 3b) und drittens die mittlere Wicklungslage (9b bzw. 7b) des zweiten bzw. ersten Schenkels miteinander in Reihe geschaltet sind.

## Claims

1. A small motor having a permanent-magnet rotor (5) and a stator (3) having a U-shaped lamination assembly having limbs (3a, 3b) whose end portions (3c) form magnetic poles (3d) for the rotor (5), the limbs (3a, 3b) carrying two alternately conducting exciter coils, characterized in that the exciter coils on both limbs (3a, 3b) comprise three nested winding layers (7a, 7b, 7c; 9a, 9b, 9c) in two winding groups (7, 9), of which firstly an outer winding layer (7c and 9c, respectively) and secondly an inner winding layer (7a and 9a, respectively) of the first limb and the second limb (3a and 3b), respectively, and thirdly the central winding layer (9b and 7b, respectively) of the second limb and the first limb, respectively, are connected in series with one another.

## Revendications

1. Petit moteur avec un rotor à aimant permanent bipolaire (5) et un stator (3) avec une pile de tôles en forme de U dont les côtés (3a, 3b) forment dans leur zone d'extrémité (3c) pour le rotor (5) des pôles magnétiques (3d), les côtés (3a, 3b) étant enroulés avec deux bobines d'excitation conductrices en alternance, caractérisé en ce que, comme bobines d'excitation sur les deux côtés (3a, 3b) dans deux groupes d'enroulements (7, 9) sont appliquées trois couches superposées d'enroulements (7a, 7b,7c; 9a, 9b, 9c), la couche d'enroulement externe (7c ou 9c), d'abord, la couche d'enroulement interne (7a ou 9a) des premier et deuxième côtés (3a, 3b), ensuite et, enfin, la couche d'enroulement centrale (9b ou 7b) des deuxième ou premier côtés étant montées en série l'une avec l'autre.
